## Europäisches Patentamt
## European Patent Office
## Office européen des brevets

(19)

(11) Numéro de publication: **0 290 700 B1**

---

(12) **FASCICULE DE BREVET EUROPEEN**

---

(45) Date de publication du fascicule du brevet:
05.12.90

(21) Numéro de dépôt: **87401081.2**

(22) Date de dépôt: **14.05.87**

(51) Int. Cl.⁵: **B62D 5/083**, B62D 6/00

---

(54) **Ensemble modulateur de fluide sous pression, notamment pour servo-direction de véhicule.**

---

(43) Date de publication de la demande:
**17.11.88 Bulletin 88/46**

(45) Mention de la délivrance du brevet:
**05.12.90 Bulletin 90/49**

(84) Etats contractants désignés:
**DE FR GB IT**

(56) Documents cités:
**EP-A- 0 072 732**
**EP-A- 0 109 085**
**EP-A- 0 112 209**
**EP-A- 0 145 546**

(73) Titulaire: **BENDIX ESPANA S.A., Balmes 243,**
**Barcelona 6(ES)**

(72) Inventeur: **Bacardit, Juan Simon, Calle**
**Mallorca 451 Sexto Piso 4aA, Barcelona 13(ES)**

(74) Mandataire: **Timoney, Ian Charles Craig et al, BENDIX**
**FRANCE Division Technique Service Brevets Bendix**
**Europe 126, rue de Stalingrad, F-93700 Drancy(FR)**

---

**Description**

La présente invention concerne les ensembles modulateurs de fluide sous pression, notamment pour servo-direction de véhicule, plus particulièrement pour la modulation de la pression de réaction dans les servo-direction, du type destiné à être interposé dans un circuit de fluide entre une source de pression et un dispositif utilisateur hydraulique, typiquement un dispositif de réaction hydraulique de servo-direction, et comprenant: une électrovalve de dosage, typiquement commandée par des signaux électriques correspondant à des paramètres significatifs de marche d'un véhicule, comportant une bobine et un noyau formant tiroir de dosage monté à coulissement dans un premier alésage dans lequel débouche une lumière d'entrée destinée à être reliée à la source de pression, le tiroir de dosage définissant, avec la lumière d'entrée, une première restriction variable entre cette lumière d'entrée et une lumière de dosage du tiroir destinée à être reliée au dispositif utilisateur, et une soupape de régulation de pression, comportant un tiroir de régulation chargé par un ressort et coulissant dans un second alésage dans lequel débouche une lumière de décharge communiquant avec une bâche, le tiroir de régulation ayant une première face exposée à la pression délivrée par l'électrovalve de dosage au dispositif utilisateur et formant, avec la lumière de décharge, une restriction variable pour le délestage dudit circuit de fluide.

Un ensemble modulateur de ce type est décrit dans le document EP-A 0 109 085. Dans ce document, l'ensemble modulateur, qui est destiné à moduler le débit de fluide adressé à la valve de distribution d'une servo-direction de véhicule pour moduler la force d'assistance fournie par cette servo-direction, comprend une soupape de régulation de pression dont le tiroir de régulation est soumis à la différentielle de pression de part et d'autre de la première restriction variable de l'électrovalve de dosage afin de maintenir constant le débit dosé par l'électrovalve de dosage et adressé à la valve de distribution de la servo-direction.

La présente invention a pour objet de proposer un ensemble modulateur de fluide de sécurité permettant d'assurer que la pression de fluide dosé par l'électrovalve de dosage et adressé au dispositif utilisateur ne dépasse pas une valeur maximum déterminée, de conception particulièrement ramassée et compacte, au fonctionnement fiable et précis et présentant une très faible hystérésis.

Pour ce faire selon l'invention, le tiroir de régulation a une seconde face exposée à la pression de la bâche et coopérant avec le ressort de charge, et le secon alésage, dans lequel coulisse le tiroir de régulation de la soupape de régulation de pression, est formé dans le tiroir de dosage de l'électrovalve de dosage.

Avec un tel agencement, le tiroir de régulation de la soupape de régulation de pression est ainsi exposé à la pression du fluide immédiatement en aval de la première restriction variable de l'électrovalve de dosage, en assurant ainsi une sécurité accrue en évitant tout risque de surpression accidentelle même momentanée, dans le circuit du dispositif utilisateur hydraulique.

D'autres caractéristiques et avantages de la présente invention ressortiront de la description suivante d'un mode de réalisation, donné à titre illustratif mais nullement limitatif, faite en relation avec les dessins annexés, sur lesquels :

- la figure 1 est une vue schématique en coupe d'un ensemble modulateur intégré selon l'invention ;
- la figure 2 est un diagramme illustrant une utilisation préférentielle de l'ensemble modulateur selon l'invention.

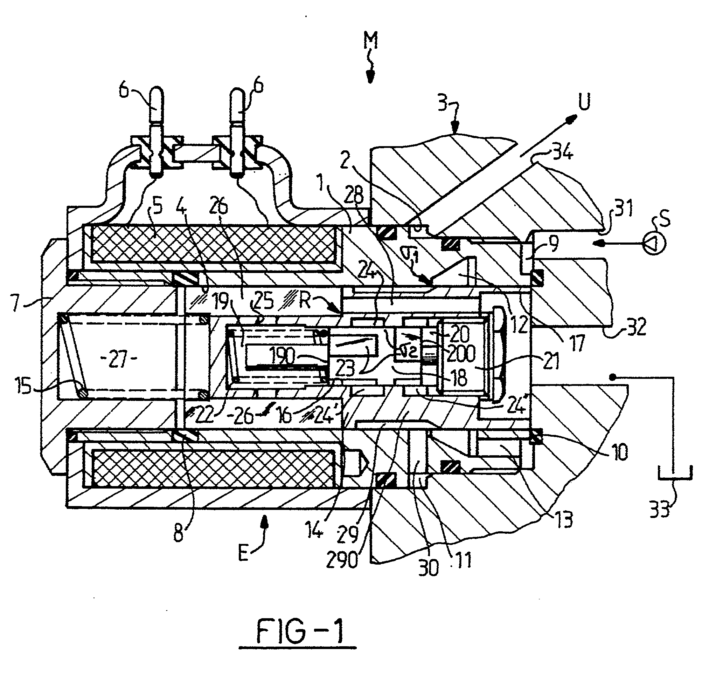

L'ensemble modulateur de fluide sous pression M représenté sur la figure 1 comprend une électrovalve de dosage E comportant un support d'électrovalve tubulaire 1, en matériau amagnétique, monté, par exemple vissé, dans un logement étagé 2 d'un corps 3 comportant une série de passages de fluide comme on le verra plus loin. Le support d'électrovalve 1 comporte un alésage longitudinal traversant 4 et supporte une bobine électromagnétique 5 destinée à être reliée à un circuit électrique de commande (non représenté) par des bornes 6 et maintenue en place sur le support 1 et contre le corps 3 par un couvercle 7 vissé dans l'extrémité extérieure de l'alésage 4 avec interposition d'un joint d'étanchéité 8. L'extrémité intérieure du support 1 comporte une zone frontale en retrait formant, avec le fond du logement 2, une chambre annulaire 9 étanchéifiée vis-à-vis de l'alésage 4 par un joint d'étanchéité annulaire 10. Le support 1 comporte également un épaulement intermédiaire définissant, avec un épaulement adjacent du logement 2, une chambre annulaire 11 étanchéifiée de part et d'autre par une paire de joints d'étanchéité annulaires. Le support 1 comporte également une chambre annulaire interne 12 à profil évolutif débouchant dans l'alésage 4 et communiquant avec la chambre annulaire d'extrémité 9 par un passage longitudinal 13.

Dans l'alésage 4 est monté à coulissement un noyau d'électrovalve formant tiroir de dosage 14 sollicité en butée contre le fond du logement 2 du corps 3 par un ressort 15 prenant appui sur le couvercle 7. Le tiroir 14 comporte un alésage central borgne 16 débouchant, à l'opposé du ressort 15, dans une chambre interne d'extrémité 17 formée dans le tiroir 14 et communiquant en permanence avec la portion du fond de logement 2 circonscrite par le joint 10. Conformément à un aspect de l'invention, dans l'alésage 16 est monté à coulissement un tiroir de régulation de pression 18 d'une soupape de régulation R et divisant le second alésage 16 en une chambre arrière 19, délimitée de l'autre côté par le fond borgne du second alésage 16, et une chambre avant 20 délimitée de l'autre côté par un organe obturateur 21 vissé dans l'alésage 16 et séparant celui-ci de façon étanche de la chambre d'extrémité 17. Le tiroir 18 est sollicité dans la direction vers l'organe obturateur 21 par un ressort calibré 22 prenant appui sur le fond de l'alésage 16 et coopérant en appui avec la face adjacente 190 du tiroir 18. Le tiroir 18 comporte, dans sa périphérie, au moins une paire de lumières 23 espacées axialement l'une de l'autre et formant avec une surface annulaire 24 entre deux lumières 24',24" axialement adjacentes dans l'alésage 16 un passage ou restriction variable $\sigma_2$ en fonction de la position du tiroir 18 dans l'alésage 16. La chambre arrière 19 du tiroir 14 communique, via au moins un passage radial 25, avec au moins une rainure externe longitudinale 26 communiquant, vers l'arrière, avec une chambre 27 définie, dans l'alésage 4, entre le couvercle 7 et le tiroir 14, et, vers l'avant, via un conduit longitudinal 28, avec la chambre d'extrémité 17. Le tiroir 14 comporte, dans sa périphérie, une gorge annulaire 29 présentant, vers l'avant, un profil évolutif définissant, avec la chambre annulaire 12 du support 1 une restriction variable $\sigma_1$ en fonction de la position du tiroir 14 dans l'alésage 4. La gorge 29 communique en permanence avec un passage radial 30 formé dans le support 1 et débouchant dans la chambre annulaire intermédiaire 2 et, via un passage transversal 290 formé dans le tiroir 14, avec la chambre avant 20. Dans le corps 3 sont formés un passage d'entrée 31 destiné à être relié à une source de fluide sous pression S et débouchant dans la chambre annulaire d'extrémité 9, un passage de décharge 32, destiné à être relié à une bâche 33 et débouchant dans l'alésage 4 en communication avec la chambre d'extrémité 17 du tiroir 14, et un passage de sortie 34, destiné à être relié à un dispositif utilisateur hydraulique U et communiquant avec la chambre annulaire intermédiaire 2.

Le fonctionnement de l'ensemble modulateur selon l'invention est le suivant. Dans la position de repos représentée sur la figure 1, le tiroir de dosage 14 est en butée, sous l'effet du ressort 15, contre le fond du logement 2, ménageant ainsi, entre la lumière d'entrée 12 et la lumière de dosage 29 une restriction offrant une section de passage maximum pour le fluide entre la source S et le dispositif utilisateur U. Le tiroir de régulation 18 est normalement en butée, sous l'effet du ressort 22, contre l'organe obturateur 21, dans une position isolant l'une de l'autre la chambre interne 20, laquelle se trouve à la pression régnant dans le passage de sortie 34 vers le dispositif utilisateur, et la chambre 19, laquelle communique en permanence, via les passages 25, 26, 28, la chambre 17, et le passage 32, avec la bâche 33. Si, à ce stade, il se produit une surpression en provenance de la source S, cette surpression, agissant dans la chambre 20 sur la face adjacente 200 du tiroir de régulation 18, déplacera ce dernier à l'encontre du ressort calibré 22 pour ouvrir une restriction déterminée $\sigma_2$ entre les chambres 20 et 19 et dériver ainsi une partie du fluide en provenance de la source S vers la bâche 33. En mode de modulation active, sous l'effet d'un champ magnétique d'une intensité déterminée exercée par la bobine 5 sur le tiroir de dosage 14, celui-ci se déplace légèrement à l'encontre du ressort 15 pour restreindre la restriction $\sigma_1$ et moduler ainsi le fluide sous pression adressé au dispositif utilisateur U. Conformément à l'invention, quelle que soit la valeur de la restriction variable $\sigma_1$, toute surpression en provenance de la source S et détectée dans la chambre 20 permettra au tiroir de régulation 18 de limiter la pression adressée au dispositif utilisateur à la valeur maximum prédéterminée par le calibrage du ressort 22, sans affecter le fonctionnement du tiroir de dosage 14 qui demeure équilibré en étant soumis, en permanence, sur ses deux côtés opposés, à la pression de la bâche 33.

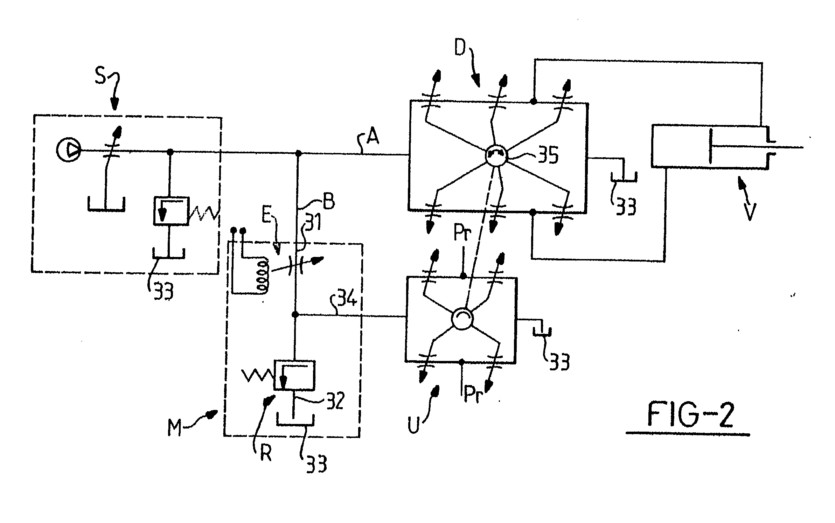

On a représenté sur la figure 2 un circuit de servo-direction de véhicule incorporant un ensemble modulateur M selon l'invention, tel que décrit ci-dessus. L'ensemble de servo-direction comprend une valve de distribution D actionnable par un organe d'entrée 35, couplé typiquement à un volant de direction, pour commander un vérin d'assistance V. La valve de distribution D reçoit directement, via un conduit A, le fluide en provenance de la source S, éventuellement pourvue d'un ensemble modulateur propre analogue à celui selon l'invention. Le dispositif de servo-direction comprend en outre un dispositif de réaction hydraulique U actionné par l'organe d'entrée 35 pour fournir sur celui-ci un couple de réaction opposé au couple d'actionnement de la valve de distribution D. Le dispositif de réaction U est piloté par un ensemble modulateur M selon l'invention interposé dans le circuit de fluide B entre la source S et le dispositif de réaction U. Un dispositif de servo-direction de ce type est décrit dans le document EP-A- 0 112 209 au nom de la demanderesse, dont le contenu est supposé intégré ici pour référence.

**Revendications**

1. Ensemble modulateur de fluide sous pression, destiné à être interposé dans un circuit de fluide entre une source de pression (S) et un dispositif utilisateur hydraulique (U), comprenant:
   – une électrovalve de dosage (E) comportant une bobine (5) et un noyau formant tiroir de dosage (14) monté à coulissement dans un premier alésage (4) dans lequel débouche une lumière d'entrée (12), destinée à être reliée à la source de pression (S), le tiroir de dosage (14) définissant une première restriction variable ($6_1$) entre la lumière d'entrée (12) et une lumière de dosage (29) du tiroir destinée à être reliée au dispositif utilisateur (U), et
   – une soupape de régulation de pression (R) comportant un tiroir de régulation (18) chargé par un ressort (22) et coulissant dans un second alésage (16) dans lequel débouche une lumière de décharge (24') communiquant avec une bâche (33), le tiroir de régulation (18), ayant une première face (200) exposée à la pression délivrée par l'électrovalve de distribution (E) vers le dispositif utilisateur (U) et formant, avec la lumière de décharge (24'), une seconde restriction variable ($6_2$) pour le délestage dudit circuit de fluide, caractérisé en ce que le tiroir de régulation a une seconde face (190) exposée à la pression de la bâche (33) et coopérant avec le ressort de charge (22), et en ce que le second alésage (16), dans lequel coulisse le tiroirde régulation (18), est formé dans le tiroir de dosage (14) de l'électrovalve de dosage (E).

2. Ensemble selon la revendication 1, caractérisé en ce que la lumière de dosage (29) est formée dans la périphérie du tiroir de dosage (14) et communique en permanence avec une lumière de sortie (30) débouchant dans le premier alésage (4).

3. Ensemble selon la revendication 2, caractérisé en ce que le second alésage (16) communique, par une première extrémité (20), avec la lumière de dosage (29), et, par une seconde extrémité (19) abritant le ressort de charge (22), avec un passage interne (25, 26, 28, 17) du tiroir de dosage (14) communiquant avec la bâche (33).

4. Ensemble selon la revendication 3, caractérisé en ce que le second alésage (16) est borgne et débouche, à la première extrémité, dans une chambre d'extrémité (17) communiquant avec la bâche (33), ladite première extrémité du second alésage (16) étant fermée par un organe obturateur (21).

5. Ensemble selon la revendication 4, caractérisé en ce que le passage interne du tiroir de dosage (14) comprend au moins une rainure longitudinale externe (26) communiquant avec le premier alésage (4), avec la seconde extrémité (19) du second alésage (16), et avec un conduit longitudinal (28) communiquant avec la chambre d'extrémité (17).

6. Ensemble selon l'une des revendications précédentes, caractérisé en ce que le premier alésage (4) est formé dans un support d'électrovalve (1) monté dans un logement étagé (2) d'un corps (3) dans lequel sont formés des passages de fluide (31; 34; 32 respectivement) de raccordement à la source (S) au dispositif utilisateur (U) et à la bâche (33).

7. Ensemble selon la revendication 6, caractérisé en ce que la bobine (5) de l'électrovalve (E) est maintenue sur le support (1) par un couvercle (7) fermant le premier alésage (4).

8. Ensemble selon la revendication 7, caractérisé en ce que l'électrovalve (E) comprend un ressort de sollicitation (15) disposé entre le couvercle (7) et le tiroir de dosage (14).

## Patentansprüche

1. Modulationseinheit für ein unter Druck stehendes Fluid, die dazu bestimmt ist, in einem Fluidkreis zwischen einer Druckquelle (S) und einer hydraulischen Verbrauchervorrichtung (U) eingefügt zu werden, mit:
— einem Dosier-Elektroventil (E), das eine Spule (5) sowie einen einen Dosierschieber (14) bildenden Kern umfaßt, der in einer ersten Bohrung (4) gleitend gelagert ist, in welcher eine Eintrittsöffnung (12) mündet, die dazu bestimmt ist, mit der Druckquelle (S) verbunden zu werden, wobei der Dosierschieber (14) eine erste variable Drosselstelle ($6_1$) zwischen der Eintrittsöffnung (12) und einer Dosieröffnung (29) des Schiebers bildet, welche dazu bestimmt ist, mit der Verbrauchervorrichtung (U) verbunden zu werden, und
— einem Druckregulier-Ventil (R), das einen Einstell-Schieber (18) umfaßt, der von einer Feder (22) belastet wird und in einer zweiten Bohrung (16) gleitet, in welcher eine Entlastungsöffnung (24') mündet, die mit einem Behälter (33) in Verbindung steht, wobei der Einstell-Schieber (18) eine erste Fläche (200) aufweist, die dem durch das Verteilerventil (E) zu der Verbrauchervorrichtung (U) hin gelieferten Druck ausgesetzt ist und mit der Entlastungsöffnung (24') eine zweite variable Drosselstelle ($6_2$) für die Entlastung des genannten Fluidkreises bildet, dadurch gekennzeichnet, daß der Einstell-Schieber eine zweite Fläche (190) aufweist, welche dem Druck des Behälters (33) ausgesetzt ist und mit der Belastungsfeder (22) zusammenarbeitet, und daß die zweite Bohrung (16), in welcher der Einstell-Schieber (18) gleitet, in dem Dosierschieber (14) des Dosier-Elektroventils (E) ausgebildet ist.

2. Einheit nach Anspruch 1, dadurch gekennzeichnet, daß die Dosieröffnung (29) am Umfang des Dosierschiebers (14) gebildet ist und mit einer Austrittsöffnung (30), die in die erste Bohrung (4) mündet, dauernd in Verbindung steht.

3. Einheit nach Anspruch 2, dadurch gekennzeichnet, daß die zweite Bohrung (16) mit der Dosieröffnung (29) über ein erstes Ende (20) und mit einem Innendurchgang (25, 26, 28, 17) des Dosierschiebers (14), der mit dem Behälter (33) verbunden ist, über ein zweites, die Belastungsfeder (22) aufnehmendes Ende, verbunden ist.

4. Einheit nach Anspruch 3, dadurch gekennzeichnet, daß die zweite Bohrung (16) blind ist und an dem ersten Ende in eine Endkammer (17) mündet, die mit dem Behälter verbunden ist, wobei das genannte erste Ende der zweiten Bohrung (16) von einem Verschlußelement (21) geschlossen wird.

5. Einheit nach Anspruch 4, dadurch gekennzeichnet, daß der Innendurchgang des Dosierschiebers (14) wenigstens eine längliche Außenrille (26) aufweist, die mit der ersten Bohrung (4), dem zweiten Ende (19) der zweiten Bohrung (16) und mit einer Längsleitung (28), die mit dem Endkammer (17) verbunden ist, in Verbindung steht.

6. Einheit nach einem der vorstehenden Ansprüche, dadurch gekennzeichnet, daß die erste Bohrung (4) in einem Ventilträger (1) ausgebildet ist, der in einer abgestuften Aufnahme (2) eines Körpers (3) angebracht ist, in welchem Fluid-Durchgänge (31; 34 bzw. 32) zum Anschließen an die Quelle, (S) an die Benutzungs-Vorrichtung (U) sowie an den Behälter (33) ausgebildet sind.

7. Einheit nach Anspruch 6, dadurch gekennzeichnet, daß die Spule (5) des Elektroventils (E) durch einen die erste Bohrung (4) schließenden Deckel (7) auf dem Träger (1) festgehalten wird.

8. Einheit nach Anspruch 7, dadurch gekennzeichnet, daß das Elektroventil (E) eine Belastungsfeder (15) umfaßt, die zwischen dem Deckel (7) und dem Dosierschieber (14) angeordnet ist.

## Claims

1. Pressurized fluid modulator assembly intended to be interposed in a fluid circuit between a pressure source (S) and a hydraulic user device (U), and comprising:
— a metering electrovalve (E) comprising a coil (5) and a core forming a metering slide (14) mounted for sliding in a first bore (4) into which leads an inlet port (12) intended to be connected to the pressure source (S), said metering slide (14) defining a first variable restriction ($\sigma_1$) between the inlet

port (12) and a metering port (29) provided in said slide and intended to be connected to the user device (U), and

– a pressure regulation valve (R) comprising a regulation slide (18) loaded by a spring (22) and sliding in a second bore (16) into which leads a discharge port (24') in communication with a tank (33), the regulation slide (18) having a first face (200) exposed to the pressure delivered by the metering electrovalve (E) to the user device (U) and forming, together with the discharge port (24'), a second variable restriction ($\sigma 2$) for the relief of said fluid circuit, characterized in that the regulation slide has a second face (190) exposed to the pressure of the tank (33) and cooperating with the loading spring (22) and in that the second bore (16), in which the regulation slide (18) slides, is formed in the metering slide (14) of the metering electrovalve (E).

2. Assembly according to Claim 1, characterized in that the metering port (29) is formed in the periphery of the metering slide (14) and is permanently in communication with an outlet port (30) leading into the first bore (4).

3. Assembly according to Claim 2, characterized in that the second bore (16) communicates via a first end (20) with the metering port (29) and, via a second end (19) accommodating the loading spring (22), with an internal passage (25, 26, 28, 17) provided in the metering slide (14) and in communication with the tank (33).

4. Assembly according to Claim 3, characterized in that the second bore (16) is blind and leads, at the first end, into an end chamber (17) communicating with the tank (33), said first end of the second bore (16) being closed by a closure member (21).

5. Assembly according to Claim 4, characterized in that the internal passage of the metering slide (14) has at least one external longitudinal groove (26) communicating with the first bore (4), with the second end (19) of the second bore (16), and with a longitudinal duct (28) in communication with the end chamber (17).

6. Assembly according to one of the preceding claims, characterized in that the first bore (4) is formed in an electrovalve support (1) mounted in a stepped socket (2) in a body (3) in which are formed fluid passages (31; 34; 32 respectively) for connection to the source (S), to the user device (U), and to the tank (33).

7. Assembly according to Claim 6, characterized in that the coil (5) of the electrovalve (5) is held on the support (1) by a cover (7) closing the first bore (4).

8. Assembly according to Claim 7, characterized in that the electrovalve (E) contains a loading spring (15) disposed between the cover (7) and the metering slide (14).

FIG-1

FIG-2

EP 0 290 700 B1